(19) 

**Europäisches Patentamt**
**European Patent Office**
**Office européen des brevets**

(11) **EP 4 640 768 A1**

(12) **EUROPEAN PATENT APPLICATION**
published in accordance with Art. 153(4) EPC

(43) Date of publication:
**29.10.2025 Bulletin 2025/44**

(21) Application number: **23906753.1**

(22) Date of filing: **07.12.2023**

(51) International Patent Classification (IPC):
*C08L 101/00* (2006.01)   *B29B 15/08* (2006.01)
*C08J 3/20* (2006.01)   *C08J 5/00* (2006.01)
*C08K 5/098* (2006.01)   *C08L 1/02* (2006.01)
*C08L 101/16* (2006.01)   *B29K 105/12* (2006.01)

(52) Cooperative Patent Classification (CPC):
**B29B 15/08; C08J 3/20; C08J 5/00; C08K 5/098;**
**C08L 1/02; C08L 101/00; C08L 101/16;**
B29K 2105/12

(86) International application number:
**PCT/JP2023/043878**

(87) International publication number:
**WO 2024/135387 (27.06.2024 Gazette 2024/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **20.12.2022   JP 2022203352**
**20.07.2023   JP 2023118576**

(71) Applicant: **Oji Holdings Corporation**
**Chuo-ku**
**Tokyo 104-0061 (JP)**

(72) Inventors:
- **SAKAI, Mizuki**
  **Tokyo 104-0061 (JP)**
- **KAJITA, Keiichi**
  **Tokyo 104-0061 (JP)**
- **ISOGAI, Takuya**
  **Tokyo 104-0061 (JP)**
- **OKUDA, Keiko**
  **Tokyo 104-0061 (JP)**
- **YAMAGUCHI, Sakiko**
  **Tokyo 104-0061 (JP)**

(74) Representative: **Godemeyer Blum Lenze**
**Patentanwälte**
**Partnerschaft mbB - werkpatent**
**An den Gärten 7**
**51491 Overath (DE)**

(54) **CELLULOSE FIBER-CONTAINING MOLDED ARTICLE, AND METHOD FOR MANUFACTURING SAME**

(57)   The present invention relates to the provision of: a cellulose fiber-containing molded article having excellent flexural modulus and Charpy impact strength; and a method for manufacturing the cellulose fiber-containing molded article. The cellulose fiber-containing molded article according to the present invention comprises cellulose fibers, a resin A, and a fatty acid metal salt, in which the fatty acid metal salt is a metal salt of a saturated or unsaturated fatty acid having 12 to 24 carbon atoms inclusive, the content of the cellulose fibers in the molded article is 15% by mass to 70% by mass inclusive, the content of the fatty acid metal salt is 0.1% by mass to 10% by mass inclusive, and formula (i) or (ii) is satisfied wherein X (GPa) represents a flexural modulus of the molded article and Y (kJ/m2) represents a Charpy impact strength at a thickness of 4 mm.

$$(i): 1.8 \leq X \leq 3.5 \text{ and } 100 \geq Y \geq 38-8X$$

$$(ii): 3.5 \leq X \leq 10 \text{ and } 100 \geq Y \geq 10$$

EP 4 640 768 A1

## Description

Technical Field

The present invention relates to a cellulose fiber-containing molded article and a method for manufacturing the same.

Background Art

A fiber-reinforced plastic molded article that has been molded from a nonwoven fabric containing a reinforcing fiber such as a carbon fiber or a glass fiber (also referred to as a sheet for a fiber-reinforced plastic molded article) is already used in various fields such as sports, leisure goods, aircraft materials, and electronic equipment members. In the fiber-reinforced plastic molded article, a thermosetting resin or a thermoplastic resin is used as a resin serving as a matrix, and in recent years, a fiber-reinforced plastic molded article using a thermoplastic resin has been developed.

As the reinforcing fiber, a carbon fiber, a glass fiber, an aramid fiber, and the like are used. Such reinforcing fiber works to increase a strength of a fiber-reinforced plastic molded article. In a case where such a molded product is discarded, the molded product is landfilled or incinerated, but a molded product using a reinforcing fiber as described above has problems that biodegradability after landfill is low, and that a load applied to an incinerator or the like is large at the time of incineration.

For this reason, in recent years, it has been proposed to use a cellulose fiber as the reinforcing fiber (for example, Patent Literatures 1 to 3). In Patent Literatures 1 and 2, a molded product is obtained by subjecting a slurry containing a pulp fiber and a thermoplastic resin to papermaking, and subjecting a papermaking and molding intermediate product which has been molded to heat and pressure molding. In Patent Literature 3, it is proposed to manufacture a molded product by forming a pellet from a slurry containing a pulp fiber and a thermoplastic resin, and injection-molding the pellet.

Citation List

Patent Literature

Patent Literature 1: JP 06-322699 A
Patent Literature 2:JP 06-346399 A
Patent Literature 3: JP 06-345944 A

Summary of Invention

Technical Problem

In the molded articles disclosed in Patent Literatures 1 to 3, a pulp fiber is used as a reinforcing fiber, and therefore biodegradability is favorable, and an environmental load can be reduced at the time of incineration or the like.

However, in a conventional molded article such as the molded articles disclosed in Patent Literatures 1 to 3, when an attempt is made to increase one of a flexural modulus and a Charpy impact strength, the other value tends to decrease.

An object of the present invention is to provide a cellulose fiber-containing molded article excellent in flexural modulus and Charpy impact strength, and a method for manufacturing the same.

Solution to Problem

The present inventors have found that, in molding containing a cellulose fiber, a resin A, and an aliphatic metal salt, the above problems are solved by setting the content of the cellulose fiber and the content of the aliphatic metal salt within specific ranges, and further by setting a flexural modulus X and a Charpy impact strength Y to satisfy specific relational formulas, thereby completing the present invention.

Specifically, the present invention relates to the following <1> to <12>.

<1> A cellulose fiber-containing molded article containing a cellulose fiber, a resin A, and a fatty acid metal salt, wherein the fatty acid metal salt is a metal salt of a saturated or unsaturated fatty acid optionally having a hydroxy group and having 12 or more and 24 or less carbon atoms, the content of the cellulose fiber in the molded article is 15% by mass or more and 70% by mass or less, the content of the fatty acid metal salt is 0.1% by mass or more and 10% by mass or less, and when a flexural modulus of the molded article is represented by X GPa and a Charpy impact strength thereof at a thickness of 4 mm is represented by Y kJ/m$^2$, the molded article satisfies the following (i) or (ii):

$$\text{(i)} \quad 1.8 \leq X \leq 3.5 \text{ and } 100 \geq Y \geq 38 - 8X$$

$$\text{(ii)} \quad 3.5 \leq X \leq 10 \text{ and } 100 \geq Y \geq 10$$

<2> The cellulose fiber-containing molded article according to <1>, wherein the fatty acid metal salt is a fatty acid calcium salt optionally having a hydroxy group.

<3> The cellulose fiber-containing molded article according to <1> or <2>, wherein the fatty acid metal salt is at least one selected from the group consisting of calcium stearate, calcium laurate, calcium behenate, and calcium hydroxystearate.

<4> The cellulose fiber-containing molded article according to any one of <1> to <3>, wherein the resin A contains a polyolefin resin.

<5> The cellulose fiber-containing molded article according to <4>, wherein the content of the polyolefin resin in the molded article is 25% by mass or more and 80% by mass or less.

<6> The cellulose fiber-containing molded article according to any one of <1> to <5>, wherein the resin A contains an elastomer.

<7> The cellulose fiber-containing molded article according to <6>, wherein the content of the elastomer in the molded article is 5% by mass or more and 20% by mass or less.

<8> A method for manufacturing the cellulose fiber-containing molded article according to any one of <1> to <7>, the method including the following step 1, step 2, step 3-1, and step 4 in this order, or including step 1, step 2, step 3-2, and step 4 in this order, wherein an aliphatic metal salt is added in at least one step selected from the group consisting of step 1, step 3-1, and step 4:

Step 1: a fiber aggregate manufacturing step of manufacturing a fiber aggregate containing a cellulose fiber and at least a part of the resin A by dry papermaking

Step 2: a fiber aggregate sheet manufacturing step of manufacturing a fiber aggregate sheet by compressing the fiber aggregate

Step 3-1: a cellulose fiber-containing resin pellet manufacturing step of manufacturing a pellet by melt-kneading the fiber aggregate sheet

Step 3-2: a cellulose fiber-containing resin pellet manufacturing step of cutting the fiber aggregate sheet

Step 4: a molded article manufacturing step of manufacturing a molded article using a cellulose fiber-containing resin pellet

<9> The method for manufacturing the cellulose fiber-containing molded article according to <8>, wherein the fiber aggregate contains a polyolefin fiber in addition to the cellulose fiber.

<10> The method for manufacturing the cellulose fiber-containing molded article according to <8> or <9>, wherein an elastomer is further melt-kneaded in at least one step selected from the group consisting of step 3-1 and step 4.

<11> The method for manufacturing the cellulose fiber-containing molded article according to any one of <8> to <10>, wherein in step 1, the fiber aggregate is manufactured by an air-laid method.

<12> The method for manufacturing the cellulose fiber-containing molded article according to any one of <8> to <11>, wherein when a tensile strength of the fiber aggregate sheet obtained in step 2 in a first direction is represented by T, and a tensile strength of the fiber aggregate sheet in a second direction perpendicular to the first direction is represented by Y, T/Y is 0.5 or more and 1.5 or less.

Advantageous Effects of Invention

The present invention provides a cellulose fiber-containing molded article excellent in flexural modulus and Charpy impact strength, and a method for manufacturing the same.

Brief Description of Drawing

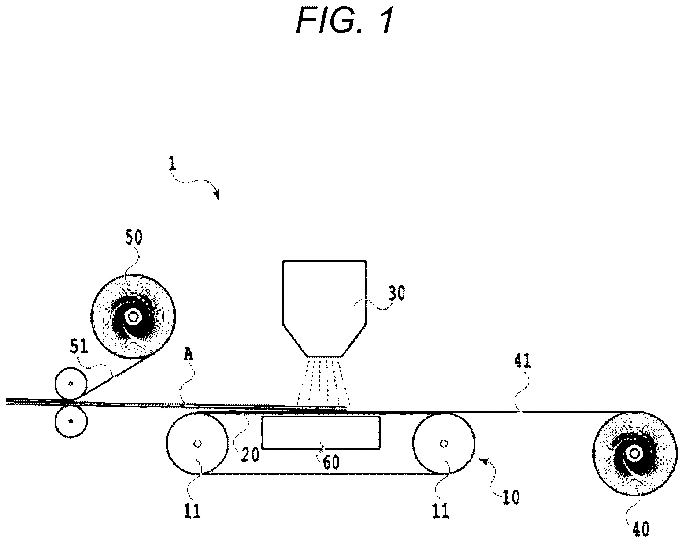

Fig. 1 is a schematic diagram illustrating a web forming apparatus used in a manufacturing method in manufacturing a molding fiber aggregate of the present embodiment.

Description of Embodiments

[Cellulose fiber-containing molded article]

A cellulose fiber-containing molded article (hereinafter, also simply referred to as a "molded article") of the present invention is a molded article containing a cellulose fiber, a resin A, and a fatty acid metal salt, in which the fatty acid metal salt is a metal salt of a saturated or unsaturated fatty acid optionally having a hydroxy group and having 12 or more and 24 or less carbon atoms, the content of the cellulose fiber in the molded article is 15% by mass or more and 70% by mass or less, the content of the fatty acid metal salt is 0.1% by mass or more and 5% by mass or less, and when a flexural modulus of the molded article is represented by X GPa and a Charpy impact strength thereof at a thickness of 4 mm is represented by Y kJ/m$^2$, the molded article satisfies the following (i) or (ii):

$$\text{(i)} \quad 1.8 \leq X \leq 3.5 \text{ and } 100 \geq Y \geq 38 - 8X$$

$$\text{(ii)} \quad 3.5 \leq X \leq 10 \text{ and } 100 \geq Y \geq 10$$

The present invention provides a cellulose fiber-containing molded article excellent in stiffness against bending (flexural modulus) and Charpy impact strength. The cellulose fiber-containing molded article of the present invention is excellent in both flexural modulus and Charpy impact strength, and therefore can be applied to various applications to which it has been difficult to apply a molded article so far, and a range of applicability can be widened. In addition, in a conventional molded article, even if one of the physical properties is excellent, the other of the physical properties is low, and thus there is a limit to thickness reduction in order to satisfy required performance. However, the molded article of the present invention can contribute to weight reduction by further thickness reduction.

A detailed reason why the above effect is obtained is not clear, but a part of the reason is considered as follows.

In order to develop impact resistance in a molded article, a cellulose fiber needs to be appropriately pulled out from a resin when an impact is applied to the molded article. A fatty acid metal salt has a hydrophobic portion having high affinity for the resin and a hydrophilic portion having high affinity for cellulose, and thus is presumed to be present at an interface between the resin and the cellulose fiber. Therefore, it is presumed that the fatty acid metal salt contributes to improvement of impact strength by imparting slippage at the interface between the resin and the cellulose fiber at the time of pulling.

Hereinafter, each component contained in the molded article of the present invention will be described, and then a method for manufacturing the molded article will be described.

[Cellulose fiber]

A cellulose fiber applicable to the method for manufacturing the cellulose fiber-containing molded article of the present embodiment is not particularly limited in terms of its manufacturing method, type, and the like. The cellulose fiber is preferably a pulp fiber, and may be, for example, chemical pulp such as kraft pulp of a broad-leaved tree and/or a conifer, mechanical pulp such as SGP, RGP, BCTMP, or CTMP, waste paper pulp such as deinked pulp, or non-wood pulp of kenaf, jute, bagasse, bamboo, straw, hemp, or the like. Chlorine-free pulp such as ECF pulp or TCF pulp can be used as well.

Note that the cellulose fiber is preferably a pulp fiber but is not limited thereto, and for example, wood flour may be used.

Among the above pulp fibers, a kraft pulp fiber, particularly, a kraft pulp fiber of a conifer (NBKP) having a long fiber length is preferably used as the cellulose fiber because a resulting molded article has better stiffness against bending and better impact resistance.

An average fiber length of the cellulose fibers is preferably 0.1 mm or longer and 50 mm or shorter, more preferably 0.5 mm or longer, and still more preferably 1 mm or longer, and more preferably 10 mm or shorter, still more preferably 5 mm or shorter, and further still more preferably 2.5 mm or shorter from a viewpoint of improving stiffness against bending and impact resistance of a resulting molded article and from a viewpoint of ease of manufacture of a fiber aggregate.

The average fiber length of the cellulose fibers is measured by a method described in Examples.

An average fiber width of the cellulose fibers is preferably 1 μm or larger and 150 μm or smaller, more preferably 5 μm or larger, still more preferably 10 μm or larger, and further still more preferably 15 μm or larger, and more preferably 100 μm or smaller, still more preferably 80 μm or smaller, and further still more preferably 50 μm or smaller from a viewpoint of improving stiffness against bending and impact resistance of a resulting molded article and from a viewpoint of ease of manufacture of a fiber aggregate.

The average fiber width of the cellulose fibers is measured by a method described in Examples.

In the present embodiment, when the fiber aggregate is formed by an air-laid method, the cellulose fiber can be, for example, in a form of defibrated dry pulp.

The cellulose fiber is preferably an unbeaten cellulose fiber from a viewpoint of improving impact resistance of a resulting molded article.

In order to develop impact resistance in the molded article, the cellulose fiber needs to be appropriately pulled out from a resin when an impact is applied to the molded article, and for this purpose, the cellulose fiber is preferably an unbeaten cellulose fiber having a low fine fiber ratio, and more preferably an unbeaten pulp fiber.

From the above described viewpoint, the fine fiber ratio of the cellulose fiber is preferably 50% or less, more preferably 30% or less, and still more preferably 20% or less, and a lower limit thereof is not particularly limited.

The fine fiber ratio of the cellulose fiber is measured by a method described in Examples.

The content of the cellulose fiber in the molded article is 15% by mass or more and 70% by mass or less, preferably 18% by mass or more, more preferably 20% by mass or more, and still more preferably 22% by mass or more from a viewpoint of obtaining a molded article excellent in stiffness against bending and impact resistance and from a viewpoint of productivity and ease of manufacture, and is preferably 60% by mass or less, more preferably 58% by mass or less, and still more preferably 55% by mass or less from a viewpoint of obtaining the molded article.

[Resin A]

Examples of a component of the resin A include polyolefin, polyvinyl chloride, polystyrene, ABS, acrylonitrile-styrene, polyester, an acrylic resin, polyamide, polyacetal, polycarbonate, polybutylene succinate, and polylactic acid. As the resin A, the above-described components may be used singly or in combination of two or more types thereof. In addition, resins exemplified in a lubricant, a plasticizer, a nucleating agent, a flame retardant, an antistatic agent, a filler, and a papermaking chemical described in [Other components] described later or an elastomer may be used. That is, the resin A means a resin component contained in the molded article.

As described in the method for manufacturing the molded article described later, the molded article of the present invention is preferably manufactured through a step of manufacturing a cellulose fiber aggregate containing a cellulose fiber and at least a part of the resin A by dry papermaking, and then compressing the cellulose fiber aggregate to manufacture a fiber aggregate sheet. That is, at least a part of the resin A is preferably blended in the cellulose fiber aggregate. Note that the entire amount of the resin A may be blended in the cellulose fiber aggregate. In addition to this, the remaining resin A may be further added in step 3-1 or step 4. The resin A added in step 3-1 or step 4 may be the same as the resin A contained in the fiber aggregate, or may be another type of resin, and one type of resin may be added, or two or more types of resins may be added in combination.

In the present invention, the resin A contained in the fiber aggregate can be in any form of fiber, powder, granule, and pellet. Among these, the resin A contained in the fiber aggregate is preferably in a form of fiber or powder, and more preferably in a form of fiber from a viewpoint of ease of papermaking in step 1 described later. That is, the resin A contained in the fiber aggregate preferably contains a resin fiber or resin powder, more preferably contains a resin fiber, and still more preferably consists of a resin fiber.

Preferred examples of the fiber of the resin A contained in the fiber aggregate include a polyolefin fiber, a polyvinyl chloride fiber, a polyester fiber, an acrylic fiber, a polyamide fiber, a polycarbonate fiber, and a polylactic acid fiber.

Preferred examples of components of the powder, granule, and pellet of the resin A contained in the fiber aggregate include polyolefin, polyvinyl chloride, polyester, acrylic, polyamide, polycarbonate, polylactic acid, polystyrene, ABS (acrylonitrile-butadiene-styrene), acrylonitrile-styrene, polyacetal, and polybutylene succinate. In particular, preferred examples of the powder of the resin A include polyolefin, a polystyrene powder, an ABS powder, an acrylonitrile-styrene powder, a polyacetal powder, and a polybutylene succinate powder. Note that examples of the polyolefin include those similar to specific examples of a polyolefin in a polyolefin fiber described below.

Among these, the resin A contained in the fiber aggregate is preferably a polyolefin fiber. Therefore, in the molded article of the present embodiment, the resin A preferably contains a polyolefin resin.

Note that the resin A contained in the fiber aggregate can be used singly or in combination of two or more types thereof. For example, as the resin A, two types of a polylactic acid fiber and a polybutylene succinate powder may be used in combination.

(Polyolefin fiber)

In the present invention, when a polyolefin fiber is used as the resin A contained in the fiber aggregate, a polyolefin constituting the polyolefin fiber is not particularly limited, and examples thereof include a polyolefin (unmodified polyolefins) and a modified polyolefin.

A melting point of the polyolefin constituting the polyolefin fiber is preferably 200°C or lower and 80°C or higher, more preferably 195°C or lower, and still more preferably 180°C or lower, and more preferably 90°C or higher and still more preferably 100°C or higher from a viewpoint of ease of molding and from a viewpoint of suppressing deterioration of the cellulose fiber.

EP 4 640 768 A1

Examples of the polyolefin include polyethylene, polypropylene, and an ethylene-propylene copolymer (also referred to as a propylene-ethylene copolymer), and polyethylene and polypropylene are preferable.

In the modified polyolefin, examples of a method for modifying a polyolefin include acid modification and chlorination, and among these, acid modification is preferable from a viewpoint of improving affinity for a cellulose fiber.

An acid-modifying component to be used for acid modification of an acid-modified polyolefin is preferably an unsaturated carboxylic acid component. The unsaturated carboxylic acid component is a component derived from an unsaturated carboxylic acid and an acid anhydride thereof. Examples of the unsaturated carboxylic acid include acrylic acid, methacrylic acid, maleic acid, maleic anhydride, itaconic acid, itaconic anhydride, fumaric acid, and crotonic acid. Among the acids, the unsaturated carboxylic acid component is preferably at least one selected from the group consisting of acrylic acid, methacrylic acid, maleic acid, and maleic anhydride, and is particularly preferably at least one selected from the group consisting of maleic acid and maleic anhydride. A polyolefin which has been modified with at least one of maleic acid and maleic anhydride is also referred to as a maleic acid-modified polyolefin.

The acid-modified polyolefin is preferably a maleic acid-modified polyolefin, and more preferably maleic acid-modified polyethylene or maleic acid-modified polypropylene. Note that, in the acid-modified polyolefin, at least a part only needs to be acid-modified.

The polyolefin is particularly preferably at least one selected from the group consisting of polyethylene, polypropylene, polyethylene at least partially modified with maleic acid, polypropylene at least partially modified with maleic acid, and an ethylene-propylene copolymer.

The polyolefin preferably contains an acid-modified polyolefin, more preferably contains at least one of polyethylene at least partially modified with maleic acid and polypropylene at least partially modified with maleic acid, and still more preferably contains polyethylene at least partially modified with maleic acid from a viewpoint of improving stiffness against bending of a resulting molded article.

In addition, the polyolefin preferably contains no acid-modified polyolefin, and more preferably contains only polyethylene, polypropylene, and an ethylene-propylene copolymer from a viewpoint of improving impact resistance of a resulting molded article.

The polyolefin fiber may be used singly or in combination of two or more types thereof.

The polyolefin fiber may be a composite fiber formed of two or more polyolefins, and examples thereof include a split fiber, a sea-island fiber, a core-sheath fiber, and a laminated fiber. Among the fibers, a core-sheath fiber is preferable from a viewpoint of obtaining a molded article excellent in stiffness against bending and impact resistance. In a case of a core-sheath fiber, a fiber having a concentric cross-sectional structure or a fiber having an eccentric cross-sectional structure is used, but a fiber having a concentric cross-sectional structure is preferable. By using a fiber having a concentric cross-sectional structure, a more uniform fiber aggregate is obtained, which is preferable.

A fiber length of the polyolefin fiber is preferably 0.1 mm or longer and 50 mm or shorter, more preferably 1.0 mm or longer, still more preferably 2.0 mm or longer, and further still more preferably 3.0 mm or longer, and more preferably 20 mm or shorter, and still more preferably 10 mm or shorter from a viewpoint of obtaining a uniform fiber aggregate and from a viewpoint of ease of manufacture of the fiber aggregate.

The fiber length of the polyolefin fiber is measured by a method described in Examples.

The fiber diameter of the polyolefin fiber is preferably 0.1 $\mu$m or larger and 100 $\mu$m or smaller, more preferably 1 $\mu$m or larger, and still more preferably 10 $\mu$m or larger, and more preferably 80 $\mu$m or smaller, and still more preferably 50 $\mu$m or smaller from a viewpoint of obtaining a uniform fiber aggregate and from a viewpoint of ease of manufacture of the fiber aggregate.

The fiber diameter of the polyolefin fiber is measured by a method described in Examples.

A fineness of the polyolefin fiber is preferably 0.01 dtex or more and 100 dtex or less, more preferably 0.1 dtex or more, and still more preferably 1 dtex or more, and more preferably 50 dtex or less, and still more preferably 10 dtex or less from a viewpoint of obtaining a uniform fiber aggregate and from a viewpoint of ease of manufacture of the fiber aggregate.

When the resin A contained in the fiber aggregate is a polyolefin fiber, the content of the polyolefin fiber in the fiber aggregate is preferably 90% by mass or less and 10% by mass or more from a viewpoint of obtaining a molded article excellent in stiffness against bending and impact resistance, more preferably 80% by mass or less and still more preferably 70% by mass or less from a viewpoint of productivity and ease of manufacture, and further still more preferably 50% by mass or less and particularly preferably 40% by mass or less from a viewpoint of biomass degree and productivity, and more preferably 15% by mass or more and still more preferably 25% by mass or more from a viewpoint of obtaining the molded article.

Note that when two or more types of polyolefin fibers are used, the above content means a total content of the polyolefin fibers.

When the resin A is a fiber other than a polyolefin fiber, a preferable fiber length, fiber diameter, fineness, and content of the fiber are similar to the preferable fiber length, fiber diameter, fineness, and content of the polyolefin fiber, respectively.

When the resin A is in a form of powder, granule, or pellet, a preferred content of the powder, the granule, or the pellet is similar to the preferred content of the polyolefin fiber. When the resin A is in a form of powder, granule, or pellet, a particle diameter of the powder, the granule, or the pellet is not particularly limited.

(Other resin A)

When the resin A in the fiber aggregate of the present embodiment is a polyolefin fiber, the fiber aggregate may contain another resin A in addition to the above-described cellulose fiber and the polyolefin fiber. Examples of other components include an elastomer and resins exemplified in a lubricant, a plasticizer, a nucleating agent, a flame retardant, an antistatic agent, a filler, and a papermaking chemical described later.

Note that, as described above, the polyolefin resin is preferably contained in at least the fiber aggregate, but in addition to this, similarly to an elastomer described later, the polyolefin resin may be added in step 3-1 or step 4 described later.

The content of the polyolefin resin in the molded article is preferably 25% by mass or more and 80% by mass or less, more preferably 30% by mass or more, still more preferably 35% by mass or more, further still more preferably 40% by mass or more, and more preferably 75% by mass or less and still more preferably 70% by mass or less.

(Elastomer)

The cellulose fiber-containing molded article of the present embodiment is preferable because the cellulose fiber-containing molded article may contain an elastomer as the resin A and tends to improve impact resistance by containing an elastomer. Note that, when the cellulose fiber-containing molded article contains an elastomer, stiffness against bending tends to decrease, and therefore an elastomer only needs to be used according to desired characteristics.

The elastomer represents a polymer compound exhibiting elastic deformation, and refers to a substance having a property of softening and exhibiting fluidity when heat is applied thereto and returning to a rubber shape when cooled.

The elastomer specifically has a structure formed of two polymers of a hard segment and a soft segment, and the hard segment serves as a crosslinking point, and the soft segment exhibits rubber elasticity, thereby generating elasticity. Therefore, at room temperature, the hard segments gather to form a pseudo crosslinked state, and exhibit rubber-like physical properties, but at high temperature, the hard segments melt and lose a function of the crosslinking point, and plastic deformation is possible.

The elastomer is classified into a polystyrene-based elastomer, an olefin/alkene-based elastomer, a polyester-based elastomer, a polyvinyl chloride-based elastomer, a polyurethane-based elastomer, a polyamide-based elastomer, a polyacrylic elastomer, a silicone-based elastomer, a polyimide-based elastomer, and the like depending on a combination of a hard segment polymer and a soft segment polymer In addition, even the same type of elastomers have different characteristics depending on a ratio between the hard segment and the soft segment and a molecular weight of an elastomer.

For example, there is a polystyrene-based elastomer in which styrene is used for the hard segment and butadiene is used for the soft segment. In this case, when the amount of styrene is large, hardness is high, and compatibility with polystyrene and polyphenylene ether is improved, and when the amount of styrene is small, hardness is low, flexibility is high, and compatibility with polyolefin is improved. In addition, when a molecular weight is high, temperature characteristics and mechanical characteristics are improved, and when the molecular weight is low, processability and transparency are improved. Examples of the polystyrene-based elastomer include TUFTEC series manufactured by Asahi Kasei Corporation.

For example, there is an olefin/alkene-based elastomer in which ethylene, propylene, and butene-1 are combined. A density, an elastic modulus, and a melting point can be changed depending on a combination and a ratio at this time. In addition, a structure when the elastomer is mixed with a resin also varies, and there is a case where the elastomer is dispersed in a sea-island shape or is compatible with the resin. Examples of the olefin/alkene-based elastomer include TAFMER series manufactured by Mitsui Chemicals, Inc.

Among these, a polystyrene-based elastomer and an olefin/alkene-based elastomer are preferable from a viewpoint of impact resistance and the like.

Examples of the elastomer include various elastomers described in paragraph 0043 to 0065 of JP 2020/080328 A**.**

A method for adding an elastomer is not particularly limited, and it is preferable to supply the elastomer together with a fiber aggregate sheet when the fiber aggregate sheet is melt-kneaded, and to melt-knead the mixture.

When the molded article contains the elastomer, the content of the elastomer is preferably 5% by mass or more and 55% by mass or less, more preferably 45% by mass or less, still more preferably 35% by mass or less, further still more preferably 30% by mass or less, and further still more preferably 25% by mass or less, and more preferably 8% by mass or more, still more preferably 10% by mass or more, further still more preferably 12% by mass or more, and further still more preferably 15% by mass or more with respect to the total mass of the resin A.

When the content of the elastomer is equal to or less than the above upper limit with respect to the total mass of the resin A, stiffness and strength against bending are excellent, which is preferable. When the content of the elastomer is equal to or more than the above lower limit with respect to the total mass of the resin A, impact resistance is excellent, which is preferable.

In addition, when the molded article contains the elastomer, the content of the elastomer in the molded article is preferably 3% by mass or more and 30% by mass or less, more preferably 25% by mass or less, still more preferably 20% by mass or less, and further still more preferably 16% by mass or less, and more preferably 5% by mass or more and still more preferably 8% by mass or more.

When the content of the elastomer in the molded article is equal to or less than the above upper limit, stiffness against bending is excellent, which is preferable. When the content of the elastomer is equal to or more than the above lower limit, impact resistance is excellent, which is preferable.

The content of the resin A in the molded article is preferably 35% by mass or more and 84% by mass or less, more preferably 38% by mass or more, still more preferably 40% by mass or more, and more preferably 80% by mass or less and still more preferably 76% by mass or less from a viewpoint of excellent stiffness against bending and excellent impact resistance and from a viewpoint of ease of manufacture.

[Fatty acid metal salt]

The molded article of the present embodiment contains a fatty acid metal salt.

The fatty acid metal salt is a metal salt of a saturated or unsaturated fatty acid optionally having a hydroxy group and having 12 or more and 24 or less carbon atoms. Specific examples thereof include lauric acid, myristic acid, pentadecylic acid, palmitic acid, margaric acid, stearic acid, 12-hydroxystearic acid, arachidic acid, henicosylic acid, behenic acid, lignoceric acid, myristoleic acid, palmitoleic acid, sapienic acid, oleic acid, and elaidic acid.

Examples of a metal element forming the metal salt include: a Group 1 element (alkali metal) such as sodium or potassium; a Group 2 element (alkaline earth metal) such as calcium, magnesium, or barium; a Group 3 element such as zinc or aluminum. Calcium, magnesium, zinc, and aluminum are preferable, and calcium is more preferable. That is, the fatty acid metal salt is more preferably a fatty acid calcium salt optionally having a hydroxy group.

Examples of the fatty acid metal salt include magnesium stearate, calcium stearate, zinc stearate, barium stearate, aluminum stearate, lithium stearate, calcium 12-hydroxystearate, zinc 12-hydroxystearate, magnesium 12-hydroxystearate, calcium oleate, magnesium oleate, zinc oleate, aluminum oleate, zinc laurate, calcium laurate, barium laurate, and calcium behenate.

Among these, calcium stearate, magnesium stearate, zinc stearate, aluminum stearate, calcium oleate, magnesium oleate, zinc oleate, aluminum oleate, zinc laurate, and calcium laurate are preferable, calcium stearate, calcium laurate, calcium behenate, and calcium 12-hydroxystearate are more preferable, and calcium stearate and calcium behenate are still more preferable from a viewpoint of excellent stiffness against bending and excellent impact resistance.

The content of the fatty acid metal salt in the molded article is 0.1% by mass or more and 10% by mass or less, preferably 0.3% by mass or more, more preferably 0.5% by mass or more, and still more preferably 0.8% by mass or more, and preferably 9% by mass or less, more preferably 8% by mass or less, still more preferably 7% by mass or less, and further still more preferably 6% by mass or less from a viewpoint of stiffness against bending and impact resistance.

[Other components]

In addition to the cellulose fiber, the resin A, and the fatty acid metal salt, the molded article may further contain a stabilizer, a lubricant, a plasticizer, a nucleating agent, a flame retardant, an antistatic agent, an ultraviolet absorber, a colorant (a dye or a pigment), an antiseptic agent, a filler, a surfactant, a release agent, or a papermaking chemical. These components may be blended in the fiber aggregate, or may be blended in step 3-1 or step 4. Note that, among these, a resin component corresponds to the resin A.

Examples of the stabilizer include hindered phenol, hydroquinone, phosphites, and substitutes thereof.

Examples of the lubricant include: a hydrocarbon-based lubricant such as paraffin wax, synthetic polyethylene, or liquid paraffin; a fatty acid-higher alcohol-based lubricant such as stearic acid, montanic acid, behenic acid, 12 hydroxystearic acid, or stearyl alcohol; a fatty acid amide-based lubricant such as stearic acid amide, oleic acid amide, montanic acid amide, erucic acid amide, methylene bisstearic acid amide, or ethylene bisstearic acid amide; and ester-based and half-ester-based lubricants such as glycerin monostearate, glycerin monooleate, and butyl stearate.

Examples of the plasticizer include an epoxidized vegetable oil such as epoxidized soybean oil or epoxidized linseed oil, and phthalates such as dioctyl phthalate and dibutyl phthalate.

Examples of the nucleating agent include a carboxylic acid metal salt such as sodium benzoate and a phosphoric acid ester metal salt such as phosphoric acid ester sodium salt.

Examples of the flame retardant include a halogen-based flame retardant, a phosphorus-based flame retardant, and an inorganic flame retardant such as aluminum hydroxide or magnesium hydroxide.

Examples of the antistatic agent include: an anionic activator such as an alkyl sulfonate or an alkyl benzene sulfonate; a cationic activator such as a quaternary ammonium salt, a quaternary ammonium resin, or an alkyl amisulfate; a nonionic activator such as a glycerin monofatty acid ester or a fatty acid diethanolamide; and an amphoteric activator such as an alkyl betaine or an alkylimidazolium betaine.

Examples of the ultraviolet absorber include resorcinol, salicylate, benzotriazole, and benzophenone.

Examples of the colorant include a material containing a dye such as nitrosine or a pigment such as cadmium sulfide, phthalocyanine, or carbon black.

Examples of the filler include: a mineral pigment such as kaolin, calcined kaolin, calcium carbonate, calcium sulfate, barium sulfate, titanium dioxide, talc, zinc oxide, alumina, magnesium carbonate, magnesium oxide, silica, white carbon, bentonite, zeolite, sericite, or smectite; and an organic pigment such as a polystyrene-based resin, a urea-based resin, a melamine-based resin, an acrylic resin, or a vinylidene chloride-based resin.

Examples of the papermaking chemical include a paper strength enhancer, a yield improver, a water-filterability improver, a dye, a fluorescent brightener, a pH adjusting agent, a defoaming agent, a pitch control agent and a slime control agent. Examples of the paper strength enhancer include polyacrylamide. Furthermore, a wet paper strength enhancer can also be used in combination, and examples thereof include a polyamide resin, a melamine-formaldehyde resin, a urea-formaldehyde resin, a polyamide-polyamine-epichlorohydrin resin, and a polyethyleneimine resin.

When other components are contained, the content of the other components is preferably 0.1% by mass or more and 40% by mass or less, more preferably 0.3% by mass or more and 30% by mass or less, still more preferably 0.4% by mass or more and 20% by mass or less, and further still further preferably 0.5% by mass or more and 10% by mass or less with respect to the total mass of the molded article.

[Characteristics of cellulose fiber-containing molded article]

When a flexural modulus of the cellulose fiber-containing molded article of the present embodiment is represented by X GPa and a Charpy impact strength thereof at a thickness of 4 mm is represented by Y kJ/m$^2$, the molded article satisfies the following (i) or (ii):

$$\text{(i)} \quad 1.8 \leq X \leq 3.5 \text{ and } 100 \geq Y \geq 38 - 8X$$

$$\text{(ii)} \quad 3.5 \leq X \leq 10 \text{ and } 100 \geq Y \geq 10$$

By satisfying the above formula (i) or (ii), a molded article excellent in stiffness against bending and impact resistance is obtained. In a conventional molded article, it has been difficult to obtain a molded article that satisfies the above formula (i) or (ii) and is excellent in both stiffness against bending and impact resistance.

The flexural modulus of the molded article is measured in accordance with JIS K 7171: 2016. The Charpy impact strength of the molded article is measured in accordance with JIS K7111-1: 2012, and specifically measured by a method described in Examples.

In the present embodiment, the density of a resulting molded article is preferably 0.5 g/cm$^3$ or more and 3.0 g/cm$^3$ or less, more preferably 0.8 g/cm$^3$ or more, still more preferably 0.95 g/cm$^3$ or more, and further still more preferably 1.0 g/cm$^3$ or more, and more preferably 1.5 g/cm$^3$ or less and still more preferably 1.2 g/cm$^3$ or less.

The thickness of the molded article is not particularly limited, but is preferably 0.5 mm or larger and 200 mm or smaller, more preferably 1 mm or larger, still more preferably 2 mm or larger, and further still more preferably 4 mm or larger, and more preferably 100 mm or smaller, still more preferably 50 mm or smaller, further still more preferably 20 mm or smaller, and further still more preferably 10 mm or smaller.

Note that by setting the thickness of the molded article to 2 mm or larger, the molded article can be suitably used for applications in which impact resistance is required, and therefore the thickness of the molded article is particularly preferably 2 mm or larger.

The molded article of the present embodiment preferably has a high flexural modulus, and by having a high flexural modulus, the molded article is excellent in stiffness against bending, which is preferable. The flexural modulus of the molded article is 1.8 GPa or more, preferably 1.8 GPa or more and 10 GPa or less, preferably 2.0 GPa or more, more preferably 2.5 GPa or more, and still more preferably 3.0 GPa or more, and more preferably 9 GPa or less and still more preferably 7 GPa or less.

When the flexural modulus of the molded article is equal to or less than the above upper limit, ease of manufacture is excellent, which is preferable.

The flexural modulus of the molded article is measured in accordance with JIS K 7171: 2016.

The molded article of the present embodiment preferably has a high Charpy impact strength. The Charpy impact strength of the molded article having a thickness of 4 mm is 10.0 kJ/m$^2$ or higher, preferably 10.0 kJ/m$^2$ or higher and 100 kJ/m$^2$ or lower, preferably 12 kJ/m$^2$ or higher, more preferably 15 kJ/m$^2$ or higher, and more preferably 30 kJ/m$^2$ or lower and still more preferably 20 kJ/m$^2$ or lower.

When the Charpy impact strength of the molded article is equal to or less than the above upper limit, ease of manufacture is excellent, which is preferable.

Note that the larger a numerical value of the Charpy impact strength is, the better the impact resistance is.

The molded article of the present embodiment preferably has a high bending strength. By having a high bending strength, the molded article is excellent in stiffness, which is preferable. The bending strength of the molded article is preferably 20 MPa or higher and 100 MPa or lower, more preferably 30 MPa or higher, and still more preferably 35 MPa or higher from the above viewpoint and from a viewpoint of ease of manufacture.

The bending strength of the molded article is measured in accordance with JIS K 7171: 2016.

[Applications]

The molded article of the present embodiment is preferably used for electric and electronic devices, OA devices, household electrical appliances, parts of civil engineering and construction, automobiles, and aircraft, structural parts and housings, containers (for example, food containers, drug packaging containers, cosmetic packaging containers, and medical equipment packaging containers), furniture, daily sundries, medical devices, and the like.

Among these applications, the molded article is suitable for applications to which impact resistance is required, and is suitable, for example, as parts of civil engineering and construction, automobiles, and aircrafts, structural parts, and housings.

[Method for manufacturing cellulose fiber-containing molded article]

The cellulose fiber-containing molded article of the present embodiment may be prepared by any method, and is preferably manufactured by a method including the following step 1, step 2, step 3-1, and step 4 in this order, or including step 1, step 2, step 3-2, and step 4 in this order, in which an aliphatic metal salt is added in at least one step selected from the group consisting of step 1, step 3-1, and step 4:

Step 1: a fiber aggregate manufacturing step of manufacturing a fiber aggregate containing a cellulose fiber and at least a part of the resin A by dry papermaking

Step 2: a fiber aggregate sheet manufacturing step of manufacturing a fiber aggregate sheet by compressing the fiber aggregate

Step 3-1: a cellulose fiber-containing resin pellet manufacturing step of manufacturing a pellet by melt-kneading the fiber aggregate sheet

Step 3-2: a cellulose fiber-containing resin pellet manufacturing step of cutting the fiber aggregate sheet

Step 4: a molded article manufacturing step of manufacturing a molded article using a cellulose fiber-containing resin pellet

Each step will be described below.

[Step 1: Fiber aggregate manufacturing step]

Step 1 is a fiber aggregate manufacturing step of manufacturing a fiber aggregate containing a cellulose fiber and at least a part of the resin A by dry papermaking.

In the following description of the fiber aggregate manufacturing step, a polyolefin fiber that is considered to be preferable as the resin A to be blended in step 1 is used. When a resin other than the polyolefin fiber is used as the resin A, the polyolefin fiber is replaced with the resin to be used instead of the polyolefin fiber, and the other descriptions are similar. Note that the resin A can be used singly or in combination of two or more types thereof as described below.

In the fiber aggregate manufacturing step of the present embodiment, cellulose fibers and at least a part of the resin A are manufactured by dry papermaking.

The fiber aggregate manufacturing step preferably includes a step of mixing a cellulose fiber and a polyolefin fiber in air and depositing the mixture. That is, the fiber aggregate of the present embodiment is preferably a dry nonwoven fabric.

When the fiber aggregate is manufactured by a dry papermaking method, it is preferable to adopt an air-laid method. The air-laid method is a method for forming an air-laid web by discharging an air current containing raw material fibers and the like obtained by uniformly mixing, in an air current, a polyolefin fiber and a cellulose fiber defibrated in air onto a mesh-like endless belt including a suction box on a lower side. That is, the air-laid method is a method including a step of mixing a cellulose fiber and a polyolefin fiber in air and depositing the mixture. In the air-laid method, the above operation may be repeated a plurality of times as needed.

The web which has been formed by the above method is formed into a sheet by a fiber bonding step as described below. Examples of the fiber bonding step include a method for entangling a polyolefin fiber and a cellulose fiber with each other by causing a needle to pass through the web in a direction perpendicular to a web surface as in a needle punching method to form a sheet. Such a bonding step is preferably used in combination with a web forming method by a carding method. In addition, in the fiber bonding step, a step of bonding raw material fibers by fusing a thermal fusion bonding adhesive blended in a dry method web by heating (thermal bonding method), a step of bonding raw material fibers by applying an adhesive to a resulting dry method web (chemical bonding method), or a method combining the thermal bonding method and the chemical bonding method (multi-bonding method) can be adopted.

In the thermal bonding method, heating is preferably performed at a temperature higher by 20°C or more than a melting point of the thermal fusion bonding adhesive. Examples of the heating treatment include hot air treatment, and hot pressure treatment at low pressure after hot air treatment.

In a case where the thermal bonding method or the multi-bonding method is adopted, a particulate or fibrous thermal fusion bonding adhesive is preferably used. The thermal fusion bonding adhesive may be the above-described polyolefin fiber or a binder component.

As the particulate thermal fusion bonding adhesive, thermal fusion bonding resin particles such as polyethylene, polypropylene, polyester, low-melting point polyethylene terephthalate, low-melting point polyamide, low-melting point polylactic acid, and polybutylene succinate are used.

As the fibrous thermal fusion bonding adhesive, a polyester such as low-melting point polyethylene terephthalate, low-melting point polylactic acid, polybutylene succinate (PBS), or polyethylene terephthalate (PET), and resins such as low-melting point polyamide, an acrylic resin, and vinyl acetate (PVAc) are used.

As a thermal fusion bonding synthetic fiber, a thermal fusion bonding composite synthetic fiber having a core-sheath type structure, which is obtained by combination of two types of resins having different melting points and in which only a surface of the fiber melts, can also be preferably used. The thermal fusion bonding composite synthetic fiber having a core-sheath type structure has a structure in which a sheath formed of a resin having a low melting point is formed on an outer periphery of a core formed of a resin having a high melting point. Specific examples thereof include a form in which two types of resins having different melting points are combined (PET/PET composite fiber, PE/PET composite fiber, PP/PET composite fiber, PE/PP composite fiber, and PVAc/PET composite resin)

In a case where the chemical bonding method is used for bonding of fibers, a binder component is preferably added for fixing fibers to each other. The binder component can be appropriately selected as needed. Examples thereof which can be used include: a solution type binder such as starch, casein, sodium alginate, hydroxyethyl cellulose, a sodium salt of carboxymethyl cellulose, polyvinyl alcohol (PVA), or sodium polyacrylate; and an emulsion type binder such as a polyacrylate, an acryl-styrene copolymer, polyvinyl acetate, an ethylenevinyl acetate copolymer, an acrylonitrile-butadiene copolymer, a methyl methacrylate-butadiene copolymer, a urea-melamine resin, or a styrene-butadiene copolymer resin. It is also preferable to use the above described binder component. Note that, as the above binder, various forms such as fiber, powder, granule, solution, and emulsion can be used, and two or more types thereof can also be used in combination.

In a fiber aggregate which has been manufactured by the dry papermaking method as described above, fibers constituting the fiber aggregate are randomly and three-dimensionally oriented in a longitudinal direction, a width direction, and a thickness direction. Because of this, in the present embodiment, a tensile strength of the fiber aggregate in a first direction and a tensile strength of the fiber aggregate in a second direction are approximately the same values. That is, in the present embodiment, a fiber aggregate excellent in isotropy in a planar direction is obtained.

Note that, in the fiber aggregate manufacturing step, any sheet which does not inhibit moldability may be laminated on the fiber aggregate to manufacture a laminated sheet. For example, it is possible to laminate any sheet on a surface of the fiber aggregate or between sheets when the fiber aggregate is laminated. As any sheet to be laminated, a sheet such as tissue paper or a nonwoven fabric can be used. Any sheet exemplified above is laminated for the purpose of improving surface properties, improving an interlayer strength, and imparting other functions.

[Step 2: Fiber aggregate sheet manufacturing step]

Step 2 is a fiber aggregate sheet manufacturing step of manufacturing a fiber aggregate sheet by compressing the fiber aggregate obtained in step 1. By compressing the fiber aggregate obtained in step 1, a sheet-like fiber aggregate (fiber aggregate sheet) is obtained.

Note that the above compression may be performed simultaneously with a heating treatment or may be performed after the heating treatment.

The compression of the fiber aggregate can be obtained by pressurizing the fiber aggregate with a roll press. Note that, in the roll press treatment, heating may be performed simultaneously to perform a heating and pressurizing treatment. The roll press treatment can control the density of a resulting fiber aggregate sheet to any value by pressurizing the fiber aggregate with a metal roll or a resin roll. Specifically, it is possible to obtain a fiber aggregate sheet having any density by setting the number, temperature, and clearance of rolls used for the roll press treatment to any values, and heating and pressurizing the sheet. The sheet may be caused to pass through a plurality of rolls to compress the sheet so as to have a desired density.

The compression of the fiber aggregate can also be obtained by a pressurization treatment by hot pressing. The density of a resulting fiber aggregate sheet can be controlled to any value by pressurizing the fiber aggregate cut into an appropriate size or the fiber aggregate sheet subjected to the roll press treatment by an autoclave method or a die press method. By heating the fiber aggregate at a temperature of 100°C or higher and pressurizing the fiber aggregate at a temperature of 2 MPa or higher, a fiber aggregate sheet having a density higher than that obtained by the pressurization treatment by roll pressing can be obtained.

Note that the preliminary pressing step may be included before the above heating and pressurizing conditions are obtained. It is also preferable to perform preliminary pressing at a lower pressure under desired heating conditions, and then to perform a pressurization treatment by hot pressing at an increased pressure.

The pressurization treatment step by hot pressing may be performed by a stamping molding method. The stamping molding method is a method in which a fiber aggregate is heated in advance to melt and soften a polyolefin, in this state, the resultant is put in a molding die, then the molding die is closed to perform mold clamping, and then pressure cooling is performed. A heating device such as a far-infrared heater, a heating plate, a high-temperature oven, or dielectric heating can be used for the heating.

The pressurization treatment step by hot pressing may be performed by a vacuum molding method. In the vacuum molding method, adhesion between the fiber aggregate and a die can be enhanced and moldability can be enhanced by bringing a space between the fiber aggregate and the die into a vacuum state. The vacuum molding is preferably performed in the mold clamping step of the stamping molding method described above. Specifically, vacuum molding is performed in the step of heating the fiber aggregate to melt and soften a polyolefin, in this state, putting the resultant in a molding die, and then closing the die to perform mold clamping. In the vacuum molding, vacuum suction is performed from a molding die side. The vacuum molding is usually performed at a molding pressure of $1.0 \, kg/cm^2$ or lower for about 0.1 seconds or longer and 60 seconds or shorter.

The pressurization treatment step by hot pressing may be performed by a pressure molding method. In the pressure molding method, by blowing compressed air onto the fiber aggregate, the fiber aggregate is brought into close contact with a die, and adhesion between the fiber aggregate and the die can be enhanced. The pressure molding is preferably performed in the mold clamping step of the stamping molding method described above. Specifically, molding is performed by heating the fiber aggregate to melt and soften a polyolefin, in this state, putting the resultant in a molding die, and then blowing compressed air from a fiber aggregate side. The pressure molding is often performed at a compressed air pressure of $3 \, kg/cm^2$ or higher and $8 \, kg/cm^2$ or lower, and is preferably performed for 0.1 seconds or longer and 60 seconds or shorter.

The compression of the fiber aggregate can also be obtained by a super calendering treatment.

In the above supercalendering treatment, molding is performed by causing the fiber aggregate to pass between heated rollers while a nip pressure is applied thereto. A heating temperature of the rollers to be used is preferably higher by 10 to 100°C than the melting point of the polyolefin fiber, more preferably by 20°C or more, still more preferably by 30°C or more, and is more preferably equal to or lower than a temperature which is higher by 90°C than the melting point of the polyolefin fiber, and still more preferably equal to or lower than a temperature which is higher by 80°C than the melting point of the polyolefin fiber.

The nip pressure is preferably 100 kg/cm or higher and 450 kg/cm or lower, more preferably 150 kg/cm or higher, and still more preferably 200 kg/cm or higher, and more preferably 400 kg/cm or lower and still more preferably 350 kg/cm or lower. The number of nip stages is preferably 1 or more and 20 or less, more preferably 3 or more, and still more preferably 5 or more, and more preferably 18 or less and still more preferably 16 or less.

Note that, when the fiber aggregate is compressed to manufacture a fiber aggregate sheet, a plurality of fiber aggregate sheets may be appropriately laminated and compressed according to a desired thickness or the like of the fiber aggregate sheet.

When a tensile strength of the molding fiber aggregate sheet of the present embodiment in a first direction is represented by T, and a tensile strength of the molding fiber aggregate sheet in a second direction perpendicular to the first direction is represented by Y, T/Y is preferably 0.5 or more and 1.5 or less. By setting the T/Y to 0.5 or more and 1.5 or less, fibers constituting the fiber aggregate sheet are extremely uniformly mixed, and therefore a molded article excellent in impact resistance as well as stiffness and strength against bending is obtained, which is preferable.

The T/Y is more preferably 0.60 or more, still more preferably 0.70 or more, further still more preferably 0.80 or more, and further still more preferably 0.85 or more, and more preferably 1.45 or less, still more preferably 1.35 or less, further still more preferably 1.25 or less, and further still more preferably 1.20 or less.

The first direction of the fiber aggregate sheet is any one direction in a planar direction of the fiber aggregate sheet. Note that, when fibers included in the fiber aggregate sheet are oriented in any direction of the planar direction, the orientation direction is defined as the first direction. When a flow direction in the fiber aggregate manufacturing step by dry papermaking is known, the flow direction is defined as the first direction. When the flow direction in the fiber aggregate manufacturing step is known, the flow direction in the manufacturing step is referred to as the first direction (MD direction), and a flow direction in the obtained fiber aggregate and fiber aggregate sheet is referred to as a T direction in some cases.

The second direction of the fiber aggregate is one direction in the planar direction of the fiber aggregate, and is a direction perpendicular to the first direction. When the flow direction in the fiber aggregate manufacturing step is known, a direction perpendicular to the flow direction in the manufacturing step is referred to as the second direction (CD direction), and the second direction in the obtained fiber aggregate and fiber aggregate sheet is referred to as a Y direction in some cases.

The tensile strengths of the fiber aggregate sheet in the first direction and the second direction are measured in accordance with JIS P 8113: 2006. The tensile strength in each direction is a value obtained by measuring a strip piece of $15 \pm 0.1$ mm $\times$ $180 \pm 1$ mm at a speed of $20 \pm 5$ mm/min using a Tensilon manufactured by A & D Company, Limited as a tensile tester.

The fiber aggregate sheet of the present embodiment is obtained by mixing at least a cellulose fiber and at least a part of the resin A (preferably a polyolefin fiber) and then subjecting the mixture to dry papermaking, and has a sheet shape. The fiber aggregate sheet of the present embodiment is a sheet obtained by pressing a cotton-like fiber aggregate (hereinafter, also referred to as a cotton-like fiber aggregate) after dry papermaking, and may have various bulk specific gravities (densities).

The bulk specific gravity of the fiber aggregate to be subjected to step 3-1 is preferably 0.10 g/mL or more and 0.60 g/mL or less, more preferably 0.15 g/mL or more, still more preferably 0.20 g/mL or more, and further still more preferably 0.25 g/mL or more, and more preferably 0.55 g/mL or less and still more preferably 0.50 g/mL or less from viewpoints of ease of compression in step 2, ease of melt-kneading in step 3-1, ease of cutting when the fiber aggregate is cut to be supplied to a melt-kneading machine, and the like.

The bulk specific gravity of the fiber aggregate sheet is measured by a method described in Examples.

The bulk specific gravity of the fiber aggregate sheet to be subjected to step 3-2 is preferably 0.3 g/mL or more and 1.5 g/mL or less, more preferably 0.4 g/mL or more, and still more preferably 0.5 g/mL or more, and more preferably 1.4 g/mL or less and still more preferably 1.3 g/mL or less from a viewpoint of using a subsequent cellulose fiber-containing resin pellet for molding and from a viewpoint of ease of manufacture and ease of cutting.

The bulk specific gravity of the fiber aggregate sheet is measured by a method described in Examples.

<Step 3-1>

Step 3-1 is a cellulose fiber-containing resin pellet manufacturing step of manufacturing a pellet by melt-kneading the fiber aggregate sheet obtained in step **2.**

Here, before the fiber aggregate sheet is melt-kneaded, the fiber aggregate sheet is preferably cut, crushed, and the like before being put in a melt-kneading machine from a viewpoint of facilitating supply to the melt-kneading machine.

A cutting machine is not particularly limited, and examples thereof include a shredder.

The size of the fiber aggregate sheet after cutting, crushing, and the like is not particularly limited as long as the fiber aggregate sheet can be supplied to the melt-kneading machine.

A method for manufacturing a pellet is not particularly limited as long as the fiber aggregate sheet is supplied, and melt-kneaded, and the method is not particularly limited.

Examples of an apparatus to be used for melt-kneading include a single-screw extruder, a twin-screw extruder, a kneader, a Banbury mixer, a mixing roll mill, an open roll mill, and a crush mixer. After the fiber aggregate sheet is supplied and melt-kneaded, the melt-kneaded product is subjected to, for example,

(1) a method for extruding the melt-kneaded product into a strand shape, and cooling and solidifying the resultant to obtain a cellulose fiber-containing resin pellet,
(2) a method for cooling and solidifying the melt-kneaded product as it is or after stretching the melt-kneaded product into a sheet shape, and crushing the solidified product with a crusher to obtain a cellulose fiber-containing resin pellet,
(3) a method for extruding the melt-kneaded product into a rod shape or a cylindrical shape and cooling the extruded product to obtain a cellulose fiber-containing resin pellet,
(4) a method for extruding the melt-kneaded product through a T-die to obtain a sheet-shaped or film-shaped cellulose fiber-containing resin and then cutting or crushing the resin to obtain a cellulose fiber-containing resin pellet, or
(5) a method for cutting the melt-kneaded product immediately after extrusion with a rotary blade in air or water to obtain a cellulose fiber-containing resin pellet.

The size of the pellet obtained in step 3-1 is not particularly limited, but is preferably 1 to 10 mm from a viewpoint of ease of introduction into an injection molding machine.

A melt-kneading temperature (barrel set temperature) is not particularly limited, but the barrel set temperature is preferably adjusted such that the temperature of the melt-kneaded product (temperature of the actually obtained kneaded product or resin temperature) is preferably higher by 5 to 100°C than the melting point of the polyolefin, more preferably 10°C or more, still more preferably 15°C or more, and is more preferably equal to or lower than a temperature which is higher by 90°C than the melting point of the polyolefin fiber, and still more preferably equal to or lower than a temperature which is higher by 80°C than the melting point of the polyolefin fiber from a viewpoint of melting and from a viewpoint of suppressing deterioration of the cellulose fiber.

The temperature of the melt-kneaded product is higher than the melt-kneading temperature (barrel set temperature) due to shear heat generated during melt-kneading. That is, the temperature of the melt-kneaded product changes depending on various conditions during melt-kneading, such as the melt-kneading temperature (barrel set temperature), a discharge speed, a rotation speed, and screw design of a melt-kneading machine. In a case of a method described in Examples, the temperature of the melt-kneaded product is higher by about 20 to 40°C than the melt-kneading temperature (barrel set temperature), and therefore the melt-kneading temperature (barrel set temperature) is lower by about 20 to 40°C than a preferable temperature of the melt-kneaded product.

Various conditions during melt-kneading, such as a discharge speed and a rotation speed, only need to be prepared according to a known method.

When an apparatus used for melt-kneading is a twin-screw extruder, screw design is desirably set to have as low a kneading force as possible. This is because in the present invention, the cellulose fiber and the resin A are uniformly dispersed in advance in the fiber aggregate sheet, and even if melt-kneading is performed without applying a high shear force, a dispersion state of the cellulose fiber in the fiber aggregate sheet is maintained as it is, and a pellet excellent in cellulose fiber dispersibility is obtained. Therefore, cutting of the cellulose fiber can be avoided due to the weak kneading force.

Specifically, an R-type kneading part is mainly used as a kneading part, and the number of L-type or N-type kneading parts is preferably equal to or smaller than the number of R-type kneading parts, and more preferably smaller than the number of R-type kneading parts.

The kneading parts are preferably five parts or less, and more preferably three parts or less among ten parts of the entire screw.

In step 3-1, a resin component may be further blended and melt-kneaded together with the fiber aggregate sheet, and the resin component is preferably a polyolefin resin or the above-described elastomer. In step 3-1, by blending at least one selected from the polyolefin resin and the elastomer, a molded article having better impact resistance is obtained, which is preferable.

That is, the obtained cellulose fiber-containing resin pellet contains the component blended in step 3-1 in addition to the component derived from the fiber aggregate sheet.

<Step 3-2>

Step 3-2 is a cellulose fiber-containing resin pellet manufacturing step of cutting the fiber aggregate sheet obtained in step 2.

Examples of a cutting machine used in step 3-2 include a rotary cutter, a crusher, a grinder, an electric saw, a chain saw, and a laser cutter.

The thickness of the pellet after cutting is preferably 1 mm or more and 10 mm or less, and the length and width are preferably 1 mm or more and 10 mm or less. Note that the thickness of the pellet after cutting is the thickness of the fiber aggregate sheet obtained in step 2.

Note that the shape of the cellulose fiber-containing resin pellet of the present embodiment is not particularly limited, and may have any shape such as a spherical shape, a spheroid shape, a flat spherical shape, a rod shape, a plate shape, a block shape, or a shape similar to these.

[Method for manufacturing molded article]

The method for manufacturing the molded article of the present embodiment includes a step of manufacturing the cellulose fiber-containing resin pellet described above, and a step of molding the cellulose fiber-containing resin pellet.

Note that various molding methods are adopted in the molding step, and examples thereof include injection molding (for example, injection compression molding (press injection, hot flow stamping molding, or gas injection compression molding), gas injection molding, and ultra-high speed injection molding), various types of extrusion molding (cold runner method or hot runner method), compression (press) molding, insert molding, in-mold coating molding, adiabatic die molding, rapid heating and cooling die molding, and various types of irregularly-shaped extrusion molding (for example, two-color molding and sandwich molding). For example, various types of extrusion molding are suitable for molding a sheet, a film, a fiber, and the like. An inflation method, a calendering method, a casting method, and the like can also be used for molding a sheet or a film. Furthermore, a specific stretching operation may be performed. In addition, a hollow molded product can be formed by rotational molding, blow molding, or the like.

In addition, a plurality of molding steps may be combined, or a plurality of steps may be performed simultaneously as one step. For example, a molded article may be obtained by forming the cellulose fiber-containing resin pellet into a sheet and subjecting the sheet to hot press molding, or a molded article may be obtained by forming the cellulose fiber-containing resin pellet into a sheet and subjecting the sheet to a super calendering treatment. After the cellulose fiber-containing resin pellet is molded into a sheet, the sheet may be molded by vacuum molding, pressure molding, or the like.

Among these, injection molding is preferably exemplified.

When the molding step is an injection molding step, in the injection molding step, the fiber aggregate is melt-kneaded, and the melted mixture is injected into a die to be molded, for example, using a known injection molding machine. When melt-kneading is performed, it is only required to use a known kneading machine, and examples thereof include a single-screw kneader and a twin-screw kneader.

Examples of a known injection molding machine include a screw injection molding machine, a screw preplasticating injection molding machine, a plunger preplasticating injection molding machine, and a plunger injection molding machine. Examples of a driving system include a hydraulic system, an electric system, and a hydraulic and electric hybrid system.

A temperature condition for injection molding is appropriately determined according to the type of resin contained in the pellet, and it is preferable to set a cylinder temperature of an injection molding machine to a temperature higher by 0 to 100°C than a flow start temperature of a resin to be used.

It is only required to appropriately select a temperature of the die from a viewpoint of a cooling rate of a resin to be used and productivity. For example, in a case of a polyolefin, the temperature is preferably set in a range of room temperature (for example, 23°C) to 90°C.

As other injection conditions, it is only required to appropriately adjust a screw rotation speed, a back pressure, an injection speed, a holding pressure, a pressure holding time, and the like.

The cellulose fiber-containing resin pellet of the present embodiment may contain another resin such as an elastomer by adding another resin such as an elastomer and melt-kneading the resin in step 3-1.

In addition, in the molded article manufacturing step, in addition to the cellulose fiber-containing resin pellet, another resin, various additives described above (various components exemplified as other components), a master batch containing various additives, and the like may be added during injection molding.

Examples of the additive include additives usually used in a resin composition. Examples of such an additive include the above-described stabilizer, lubricant, plasticizer, nucleating agent, flame retardant, antistatic agent, ultraviolet absorber, colorant (a dye or a pigment), an antiseptic agent, a filler, a surfactant, a release agent, and other papermaking chemicals.

Examples

The features of the present invention will be described more specifically below with reference to Examples and Comparative Examples. The materials, amounts to be used, ratios, contents of treatment, procedures of treatment, and the like described in the following Examples can be appropriately changed without departing from the gist of the present invention. Therefore, the scope of the present invention should not be interpreted as being limited by the specific examples described below.

(Example 1)

<Preparation of fiber aggregate>

NBKP was defibrated using a swirling type jet stream defibration apparatus to obtain defibrated dry pulp. A wind velocity of the treatment in the defibration machine was 45 m/min, and turbulence was generated by a baffle disposed in the apparatus. The obtained defibrated dry pulp had an average fiber length of 2.38 mm, an average fiber width of 34.3 μm, and a fine fiber ratio of 11.4%.

Then, the obtained defibrated dry pulp was uniformly mixed with a polypropylene fiber (melting point: 160°C, fineness: 6.6 dtex, fiber length: 5 mm, fiber diameter: 30 μm, also referred to as PP fiber) and a polyethylene/polypropylene composite core-sheath fiber (melting point of core portion: 160°C, melting point of sheath portion: 110°C, fineness: 1.7 dtex, fiber length: 5 mm, fiber diameter: 15 μm, also referred to as "PE/PP composite fiber") by an air flow at a ratio (mass ratio) of 60/25/15 to obtain a fiber mixture.

Then, an air-laid web was formed from the fiber mixture using the web forming apparatus 1 illustrated in Fig. 1.

Specifically, a first carrier sheet 41 was fed out by a first carrier sheet supply means 40 onto an air-permeable endless belt 20 which is mounted on a conveyor 10 and travels. In Example 1, tissue paper (basis weight: 14 g/m$^2$) was used as the first carrier sheet 41. Note that the "basis weight" was measured according to "method for measuring paper and paperboard-basis weight" described in JIS P8124: 2011.

While the air-permeable endless belt 20 was sucked by a suction box 60, the fiber mixture was dropped and deposited on the first carrier sheet 41 from a fiber mixture supply means 30 together with an air flow to obtain a cotton-like fiber aggregate. At this time, the fiber mixture was supplied such that the basis weight (set basis weight) of the air-laid web portion was 400 g/m$^2$.

Then, a second carrier sheet 51 was laminated on the cotton-like fiber aggregate on the first carrier sheet 41 by a second carrier sheet supply means 50 to obtain an air-laid web-containing laminated sheet. In Example 1, tissue paper (basis weight: 14 g/m$^2$) was used as the second carrier sheet 51. In other words, in Example 1, the same sheet was used as the first carrier sheet 41 and the second carrier sheet 51.

<Preparation of fiber aggregate dense sheet>

The obtained air-laid web-containing laminated sheet was applied to a box type dryer of a hot air circulating conveyor oven system, and was subjected to a hot air treatment at a temperature of 140°C. Thereafter, the density was adjusted by a roll press treatment such that a bulk specific gravity was 0.3 g/mL to obtain a fiber aggregate dense sheet having a basis weight of 394.8 g/m$^2$. The fiber aggregate dense sheet had a T/Y of 0.90, a bulk specific gravity of 0.28 g/mL, and a thickness of 1.41 mm.

The fiber aggregate dense sheet was cut with a shredder (AFS100M manufactured by Iris Ohyama Co., Ltd.) to obtain press-cut chips of about 4 mm × 13 mm.

<Preparation of molded article of the present embodiment>

In addition to the press-cut chips, calcium stearate (calcium stearate, NOF CORPORATION), a PP pellet (SunAllomer PM472W, SunAllomer Ltd.), and an elastomer (TUFTEC H1062, Asahi Kasei Corporation) were supplied to a twin-screw kneading extruder (HK-25D (41D) manufactured by Parker Corporation) so as to be blended as presented in Table 1, and melt-kneaded and dispersed at a kneading temperature of 180°C and a discharge amount of 6.1 kg/hr. A screw used for kneading had a weak kneading configuration in which kneading parts composed of six parts were used only for the fifth part counted from a raw material inlet side among seven parts of the entire screw, and the other parts were all composed of feed screws. One of the kneading parts closest to an outlet was an L type part, and the other kneading parts were all R type parts. After being melt-kneaded and dispersed, the mixture was air-cooled to manufacture a pellet. Using the pellet, a type A1 multipurpose test piece specified in JIS K 7139:2009 was injection-molded under conditions of a molding temperature of 180°C and an injection speed of 30 mm/sec to obtain a cellulose fiber-containing molded article. The cellulose fiber-containing molded article had a density of 0.98 g/cm$^3$.

(Example 2)

A cellulose fiber-containing molded article was obtained in a similar manner to Example 1 except that blending was performed as presented in Table 1 and the discharge amount was 4.3 kg/hour in <Preparation of molded article of the present embodiment> of Example 1. The cellulose fiber-containing molded article had a density of 1.02 g/cm$^3$.

(Example 3)

Press-cut chips were obtained in a similar manner to Example 1 except that the ratio (mass ratio) of the fiber mixture was changed to 70/15/15 in <Preparation of fiber aggregate> of Example 1. A fiber aggregate dense sheet before the press-cut chips were obtained had a T/Y of 0.87, a bulk specific gravity of 0.40 g/mL, and a thickness of 1.03 mm.

A cellulose fiber-containing molded article was obtained in a similar manner to Example 1 except that blending was performed as presented in Table 1 and the discharge amount was 5.1 kg/hour in <Preparation of molded article of the present embodiment> of Example 1. The cellulose fiber-containing molded article had a density of 1.02 g/cm$^3$.

(Example 4)

A cellulose fiber-containing molded article was obtained in a similar manner to Example 3 except that blending was performed as presented in Table 1 and the discharge amount was 3.9 kg/hour in <Preparation of molded article of the present embodiment> of Example 3. The cellulose fiber-containing molded article had a density of 1.06 g/cm$^3$.

(Example 5)

A cellulose fiber-containing molded article was obtained in a similar manner to Example 3 except that blending was performed as presented in Table 1 in <Preparation of molded article of the present embodiment> of Example 3. The cellulose fiber-containing molded article had a density of 1.06 $g/cm^3$.

(Example 6)

A cellulose fiber-containing molded article was obtained in a similar manner to Example 1 except that blending was performed as presented in Table 1 and the discharge amount was 3.5 kg/hour in <Preparation of molded article of the present embodiment> of Example 1. The cellulose fiber-containing molded article had a density of 1.09 $g/cm^3$.

(Example 7)

Press-cut chips were obtained in a similar manner to Example 1 except that the ratio (mass ratio) of the fiber mixture was changed to 30/55/15 in <Preparation of fiber aggregate> of Example 1. A fiber aggregate dense sheet before the press-cut chips were obtained had a T/Y of 0.88, a bulk specific gravity of 0.29 g/mL, and a thickness of 1.55 mm.
A cellulose fiber-containing molded article was obtained in a similar manner to Example 1 except that blending was performed as presented in Table 1 and the discharge amount was 3.0 kg/hour in <Preparation of molded article of the present embodiment> of Example 1. The cellulose fiber-containing molded article had a density of 1.02 $g/cm^3$.

(Example 8)

A cellulose fiber-containing molded article was obtained in a similar manner to Example 7 except that blending was performed as presented in Table 1 in <Preparation of molded article of the present embodiment> of Example 7. The cellulose fiber-containing molded article had a density of 1.03 $g/cm^3$.

(Example 9)

A cellulose fiber-containing molded article was obtained in a similar manner to Example 7 except that blending was performed as presented in Table 1 in <Preparation of molded article of the present embodiment> of Example 7. The cellulose fiber-containing molded article had a density of 1.03 $g/cm^3$.

(Example 10)

Press-cut chips were obtained in a similar manner to Example 1 except that the ratio (mass ratio) of the fiber mixture was changed to 40/45/15 in <Preparation of fiber aggregate> of Example 1. A fiber aggregate dense sheet before the press-cut chips were obtained had a T/Y of 0.88, a bulk specific gravity of 0.32 g/mL, and a thickness of 1.20 mm.
A cellulose fiber-containing molded article was obtained in a similar manner to Example 1 except that blending was performed as presented in Table 1 and the discharge amount was 2.9 kg/hour in <Preparation of molded article of the present embodiment> of Example 1. The cellulose fiber-containing molded article had a density of 1.04 $g/cm^3$.

(Example 11)

A cellulose fiber-containing molded article was obtained in a similar manner to Example 10 except that blending was performed as presented in Table 1 in <Preparation of molded article of the present embodiment> of Example 10. The cellulose fiber-containing molded article had a density of 1.04 $g/cm^3$.

(Example 12)

Press-cut chips were obtained in a similar manner to Example 1 except that the ratio (mass ratio) of the fiber mixture was changed to 50/35/15 in <Preparation of fiber aggregate> of Example 1. A fiber aggregate dense sheet before the press-cut chips were obtained had a T/Y of 0.88, a bulk specific gravity of 0.33 g/mL, and a thickness of 1.33 mm.
A cellulose fiber-containing molded article was obtained in a similar manner to Example 1 except that blending was performed as presented in Table 1 and the discharge amount was 2.9 kg/hour in <Preparation of molded article of the present embodiment> of Example 1. The cellulose fiber-containing molded article had a density of 1.08 $g/cm^3$.

(Example 13)

A cellulose fiber-containing molded article was obtained in a similar manner to Example 12 except that blending was performed as presented in Table 1 in <Preparation of molded article of the present embodiment> of Example 12. The cellulose fiber-containing molded article had a density of 1.06 g/cm$^3$.

(Example 14)

A cellulose fiber-containing molded article was obtained in a similar manner to Example 12 except that blending was performed as presented in Table 1 and the discharge amount was 2.5 kg/hour in <Preparation of molded article of the present embodiment> of Example 12. The cellulose fiber-containing molded article had a density of 1.09 g/cm$^3$.

(Example 15)

A cellulose fiber-containing molded article was obtained in a similar manner to Example 12 except that blending was performed as presented in Table 1 in <Preparation of molded article of the present embodiment> of Example 12. The cellulose fiber-containing molded article had a density of 1.08 g/cm$^3$.

(Example 16)

A cellulose fiber-containing molded article was obtained in a similar manner to Example 12 except that blending was performed as presented in Table 1 in <Preparation of molded article of the present embodiment> of Example 12. The cellulose fiber-containing molded article had a density of 1.09 g/cm$^3$.

(Example 17)

A cellulose fiber-containing molded article was obtained in a similar manner to Example 7 except that blending was performed as presented in Table 1 and the discharge amount was 2.5 kg/hour in <Preparation of molded article of the present embodiment> of Example 7. The cellulose fiber-containing molded article had a density of 1.04 g/cm$^3$.

(Example 18)

A cellulose fiber-containing molded article was obtained in a similar manner to Example 4 except that zinc stearate (KANTO CHEMICAL CO., INC.) was used instead of calcium stearate in Example 4. The cellulose fiber-containing molded article had a density of 1.07 g/cm$^3$.

(Example 19)

A cellulose fiber-containing molded article was obtained in a similar manner to Example 5 except that zinc stearate (KANTO CHEMICAL CO., INC.) was used instead of calcium stearate in Example 5. The cellulose fiber-containing molded article had a density of 1.07 g/cm$^3$.

(Example 20)

A cellulose fiber-containing molded article was obtained in a similar manner to Example 4 except that calcium laurate (CS-3, Nitto Kasei Co., Ltd.) was used instead of calcium stearate in Example 4. The cellulose fiber-containing molded article had a density of 1.06 g/cm$^3$.

(Example 21)

A cellulose fiber-containing molded article was obtained in a similar manner to Example 4 except that calcium behenate (CS-7, Nitto Kasei Co., Ltd.) was used instead of calcium stearate in Example 4. The cellulose fiber-containing molded article had a density of 1.07 g/cm$^3$.

(Example 22)

A cellulose fiber-containing molded article was obtained in a similar manner to Example 4 except that zinc laurate (ZS-3, Nitto Kasei Co., Ltd.) was used instead of calcium stearate in Example 4. The cellulose fiber-containing molded article had a density of 1.07 g/cm$^3$.

(Example 23)

A cellulose fiber-containing molded article was obtained in a similar manner to Example 4 except that calcium 12-hydroxystearate (CS-6CP, Nitto Kasei Co., Ltd.) was used instead of calcium stearate in Example 4. The cellulose fiber-containing molded article had a density of 1.06 g/cm$^3$.

(Example 24)

A cellulose fiber-containing molded article was obtained in a similar manner to Example 4 except that zinc 12-hydroxystearate (ZS-6, Nitto Kasei Co., Ltd.) was used instead of calcium stearate in Example 4. The cellulose fiber-containing molded article had a density of 1.06 g/cm$^3$.

(Example 25)

A cellulose fiber-containing molded article was obtained in a similar manner to Example 4 except that magnesium 12-hydroxystearate (MS-6, Nitto Kasei Co., Ltd.) was used instead of calcium stearate in Example 4. The cellulose fiber-containing molded article had a density of 1.05 g/cm$^3$.

(Comparative Example 1)

To 5 kg of water, 100 g of a 0.03% solution of a polyacrylamide-based anion aggregating agent (trade name: SUMIFLOC FA-40, manufactured by Sumitomo Chemical Co., Ltd.) was added, then 25 g of ethylene vinyl alcohol copolymer (EVOH) fibers (trade name: S030, melting point: 170°C, fiber thickness: about 9 $\mu$m, fiber length: 5 mm, manufactured by Kuraray Co., Ltd.) were added thereto, and the mixture was stirred and dispersed to obtain a 0.5% EVOH fiber dispersion. Furthermore, 5.2 kg of a 0.5% NBKP (freeness: 480 mL) dispersion was added thereto, and the mixture was mixed and stirred to obtain a slurry having a ratio (mass ratio) between a pulp fiber and EVOH of 49/51.
The slurry was subjected to papermaking using a Fourdrinier paper machine and dried with a cylinder dryer at 110°C to obtain a molding fiber aggregate having a basis weight of 150 g/m$^2$. Thereafter, a density was adjusted by a roll press treatment such that a bulk specific gravity was 0.6 g/mL to obtain a fiber aggregate dense sheet. The fiber aggregate dense sheet had a T/Y of 2.69, a bulk specific gravity of 0.52 g/mL, and a thickness of 0.25 mm.
The fiber aggregate dense sheet was cut with a shredder (AFS100M manufactured by Iris Ohyama Co., Ltd.) to obtain press-cut chips of about 4 mm $\times$ 13 mm. A cellulose fiber-containing molded article was obtained in a similar manner to Example 1 except that blending was performed as presented in Table 2 and the discharge amount in the twin-screw kneading extruder was 2.5 kg/hour in <Preparation of molded article of the present embodiment> of Example 1. The cellulose fiber-containing molded article had a density of 1.02 g/cm$^3$.

(Comparative Example 2)

A cellulose fiber-containing molded article was obtained in a similar manner to Example 1 except that conifer bleached pulp, a polypropylene fiber (melting point: 160°C, fineness: 6.6dtex, fiber length: 5 mm, fiber diameter: 30 $\mu$m), and a polyethylene/polypropylene composite core-sheath fiber (core portion melting point: 160°C, sheath portion melting point: 110°C, fineness: 1.7dtex, fiber length: 5 mm, fiber diameter: 15 $\mu$m) were directly put in a twin-screw kneader at a ratio of 30/55/15 (mass ratio) without forming a dense sheet, and the discharge amount was 0.6 kg/hour. The cellulose fiber-containing molded article had a density of 0.95 g/cm$^3$.

(Comparative Example 3)

A cellulose fiber-containing molded article was obtained in a similar manner to Example 7 except that calcium stearate, a PP pellet, and an elastomer were not used and the discharge amount was 2.5 kg/hour in <Preparation of molded article of the present embodiment> of Example 7. The cellulose fiber-containing molded article had a density of 1.01 g/cm$^3$.

(Comparative Example 4)

A cellulose fiber-containing molded article was obtained in a similar manner to Example 7 except that calcium stearate was not used, only an elastomer was added at a blending ratio presented in Table 2, and the discharge amount was 2.9 kg/hour in <Preparation of molded article of the present embodiment> of Example 7. The cellulose fiber-containing molded article had a density of 0.99 g/cm³.

(Comparative Example 5)

A cellulose fiber-containing molded article was obtained in a similar manner to Example 1 except that calcium stearate was not used, a PP pellet and an elastomer were added at blending ratios presented in Table 2, and the discharge amount was 4.3 kg/hour in <Preparation of molded article of the present embodiment> of Example 1. The cellulose fiber-containing molded article had a density of 0.97 g/cm³.

[Measurement and evaluation method]

(Method for measuring fiber length and fiber diameter of polyolefin fiber)

Twenty polyolefin fibers selected at random were observed with an optical microscope, and fiber lengths thereof and fiber diameters thereof were measured.

(Method for measuring average fiber length, average fiber diameter, and fine fiber ratio of cellulose fibers (pulp fibers))

An average fiber length and an average fiber diameter of cellulose fibers (pulp fibers) were measured with a fiber image analysis apparatus (Valmet FS5 manufactured by Valmet K.K.) in accordance with ISO 16065-2. A ratio of fine fibers having a length of 0.1 mm or shorter in a measured length-weighted average fiber length distribution was defined as a fine fiber ratio.

(Method for measuring melting point of polyolefin fiber)

5 mg of polyolefin fibers are cut out, and a melting point of the polyolefin fibers is measured with a differential scanning calorimeter (DSC). The melting point is measured by raising a temperature from 30°C to 280°C at 20°C/min under a nitrogen atmosphere using Diamond DSC manufactured by Perkin Elmer.

Note that when there is a catalog value of the polyolefin fiber, or the like, the catalog value may be adopted.

(Method for measuring bulk specific gravity of fiber aggregate)

Bulk specific gravities of the fiber aggregate bulky sheet and the fiber aggregate dense sheet were calculated by measuring the thicknesses and masses of the sheets after the sheets of 50 mm square were humidified for 24 hours under conditions of 23°C and 50%RH. The thickness of the sheet was measured with a digital thickness gauge (DG-127 manufactured by Ozaki Mfg. Co., Ltd.).

(Method for measuring T/Y)

A flow direction (a traveling direction of the conveyor 10) in the manufacturing step of the obtained fiber aggregate was defined as a first direction, a direction perpendicular to the first direction was defined as a second direction, and a tensile strength (unit: N/m) was measured in accordance with JIS P 8113: 2006. By dividing the tensile strength by the thickness of a test piece, a tensile strength (unit: MPa) in each direction was calculated. A strip of 15 mm × 180 mm was subjected to the measurement at a rate of 20 mm/min using Tensilon manufactured by A & D Company, Limited as a tensile tester.

<Evaluation>

A density, a flexural modulus, a bending strength, and an impact resistance of the obtained molded product were measured according to the following methods. The results are presented in Tables 1 and **2.**

(Method for measuring density of molded product)

The obtained molded product (molded article) was cut into a strip-shaped test piece having a length of 80 mm and a width of 10 mm. The thickness of the strip-shaped test piece was measured with a constant-pressure thickness gauge (model number PG-02J manufactured by Teclock **Co.,** Ltd.), and the volume of the strip-shaped test piece was calculated. Furthermore, by measuring the mass of the strip-shaped test piece, a density thereof was calculated.

(Method for measuring flexural modulus and bending strength of molded product)

The obtained molded product was cut into a strip-shaped test piece having a length of 80 mm and a width of 10 mm, and a three point bending test was performed in accordance with JIS K 7171: 2016. The obtained flexural modulus and bending strength were evaluated in such a manner that the larger numerical values thereof were, the better stiffness and strength against bending were, respectively.

(Method for measuring impact resistance of molded product)

The obtained molded product was cut into a strip-shaped test piece having a length of 80 mm and a width of 10 mm, and a notch Charpy impact test (impact direction: edgewise) was performed in accordance with JIS K7111-1: 2012. The obtained Charpy impact strength was evaluated in such a way that the larger a numerical value thereof was, the better impact resistance was, and the stronger for impact the molded product was.

[Table 1-1]

Table 1-1

| | | | Example | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Blending [wt%] | Fiber aggregate | Pulp fiber | 24.8 | 34.9 | 34.7 | 44.7 | 44.3 | 51.6 | 25.3 | 25.4 | 25.0 | 34.4 | 34.3 | 44.0 | 43.6 |
| | | PP fiber | 10.3 | 14.6 | 7.4 | 9.6 | 9.5 | 21.5 | 46.4 | 46.6 | 45.9 | 38.7 | 38.6 | 30.8 | 30.5 |
| | | PE/PP composite fiber | 6.2 | 8.7 | 7.4 | 9.6 | 9.5 | 12.9 | 12.6 | 12.7 | 12.5 | 12.9 | 12.9 | 13.2 | 13.1 |
| | | EVOH fiber | | | | | | | | | | | | | |
| | Added components during kneading | Fatty acid metal salt | 1.0 | 1.0 | 1.0 | 1.0 | 2.0 | 2.0 | 1.0 | 0.5 | 2.0 | 1.0 | 1.5 | 1.0 | 2.0 |
| | | PP pellet | 42.9 | 28.0 | 36.6 | 24.3 | 24.0 | 12.0 | | | | | | | |
| | | Elastomer | 14.8 | 12.8 | 12.9 | 10.8 | 10.7 | | 14.7 | 14.8 | 14.6 | 13.0 | 12.8 | 11.0 | 10.8 |
| Fiber aggregate | | Bulk specific gravity [g/mL] | 0.28 | 0.28 | 0.40 | 0.40 | 0.40 | 0.28 | 0.29 | 0.29 | 0.29 | 0.32 | 0.32 | 0.33 | 0.33 |
| | | Thickness [mm] | 1.41 | 1.41 | 1.03 | 1.03 | 1.03 | 1.41 | 1.55 | 1.55 | 1.55 | 1.20 | 1.20 | 1.33 | 1.33 |
| | | Tensile strength T in first direction [MPa] | 4.052 | 4.052 | 4.876 | 4.876 | 4.876 | 4.052 | 2.089 | 2.089 | 2.089 | 3.023 | 3.023 | 3.294 | 3.294 |
| | | Tensile strength Y in second direction [MPa] | 4.508 | 4.508 | 5.632 | 5.632 | 5.632 | 4.508 | 2.383 | 2.383 | 2.383 | 3.435 | 3.435 | 3.747 | 3.747 |
| | | T/Y | 0.90 | 0.90 | 0.87 | 0.87 | 0.87 | 0.90 | 0.88 | 0.88 | 0.88 | 0.88 | 0.88 | 0.88 | 0.88 |
| Molded product | | Thickness of molded product [mm] | 4 | 4 | 4 | 4 | 4 | 4 | 4 | 4 | 4 | 4 | 4 | 4 | 4 |
| | | Density [g/cm$^3$] | 0.98 | 1.02 | 1.02 | 1.06 | 1.06 | 1.09 | 1.02 | 1.03 | 1.03 | 1.04 | 1.04 | 1.08 | 1.06 |
| | | Flexural modulus [GPa] | 2.1 | 3.0 | 3.3 | 3.6 | 3.7 | 5.3 | 2.6 | 2.9 | 3.1 | 3.5 | 3.4 | 4.0 | 3.9 |
| | | Bending strength [MPa] | 34.1 | 42.2 | 41.6 | 39.4 | 39.7 | 52.8 | 37.5 | 43.5 | 44.5 | 45.5 | 42.8 | 44.7 | 44.2 |
| | | Charpy impact strength [kJ/m$^2$] | 24.9 | 23.3 | 23.5 | 20.2 | 26.8 | 15.8 | 22.3 | 18.2 | 22.3 | 21.6 | 22.3 | 16.8 | 22.5 |

[Table 1-2]

Table 1-2

| | | | Example | | | | | | | | | | | |
|---|---|---|---|---|---|---|---|---|---|---|---|---|---|---|
| | | | 14 | 15 | 16 | 17 | 18 | 19 | 20 | 21 | 22 | 23 | 24 | 25 |
| Blending [wt%] | Fiber aggregate | Pulp fiber | 49.5 | 49.0 | 48.0 | 29.7 | 44.7 | 44.3 | 44.7 | 44.7 | 44.7 | 44.7 | 44.7 | 44.7 |
| | | PP fiber | 34.7 | 34.3 | 33.6 | 54.5 | 9.6 | 9.5 | 9.6 | 9.6 | 9.6 | 9.6 | 9.6 | 9.6 |
| | | PE/PP composite fiber | 14.9 | 14.7 | 14.4 | 14.9 | 9.6 | 9.5 | 9.6 | 9.6 | 9.6 | 9.6 | 9.6 | 9.6 |
| | | EVOH fiber | | | | | | | | | | | | |
| | Added components during kneading | Fatty acid metal salt | 1.0 | 2.0 | 4.0 | 1.0 | 1.0 | 2.0 | 1.0 | 1.0 | 1.0 | 1.0 | 1.0 | 1.0 |
| | | PP pellet | | | | | 24.3 | 24.0 | 24.3 | 24.3 | 24.3 | 24.3 | 24.3 | 24.3 |
| | | Elastomer | | | | | 10.8 | 10.7 | 10.8 | 10.8 | 10.8 | 10.8 | 10.8 | 10.8 |
| Fiber aggregate | Bulk specific gravity [g/mL] | | 0.33 | 0.33 | 0.33 | 0.29 | 0.40 | 0.40 | 0.40 | 0.40 | 0.40 | 0.40 | 0.40 | 0.40 |
| | Thickness [mm] | | 1.33 | 1.33 | 1.33 | 1.55 | 1.03 | 1.03 | 1.03 | 1.03 | 1.03 | 1.03 | 1.03 | 1.03 |
| | Tensile strength T in first direction [MPa] | | 3.294 | 3.294 | 3.294 | 2.089 | 4.876 | 4.876 | 4.876 | 4.876 | 4.876 | 4.876 | 4.876 | 4.876 |
| | Tensile strength Y in second direction [MPa] | | 3.747 | 3.747 | 3.747 | 2.383 | 5.632 | 5.632 | 5.632 | 5.632 | 5.632 | 5.632 | 5.632 | 5.632 |
| | T/Y | | 0.88 | 0.88 | 0.88 | 0.88 | 0.87 | 0.87 | 0.87 | 0.87 | 0.87 | 0.87 | 0.87 | 0.87 |
| Molded product | Thickness of molded product [mm] | | 4 | 4 | 4 | 4 | 4 | 4 | 4 | 4 | 4 | 4 | 4 | 4 |
| | Density [g/cm$^3$] | | 1.09 | 1.08 | 1.09 | 1.04 | 1.07 | 1.07 | 1.06 | 1.07 | 1.07 | 1.06 | 1.06 | 1.05 |
| | Flexural modulus [GPa] | | 5.4 | 5.2 | 5.2 | 4.0 | 3.5 | 5.4 | 3.5 | 3.6 | 3.5 | 3.6 | 3.5 | 3.4 |
| | Bending strength [MPa] | | 56.0 | 54.2 | 51.2 | 53.1 | 42.7 | 49.9 | 36.7 | 42.2 | 42.1 | 40.3 | 41.0 | 40.9 |
| | Charpy impact strength [kJ/m$^2$] | | 10.5 | 12.1 | 13.3 | 10.8 | 14.7 | 14.6 | 23.7 | 20.9 | 14.7 | 21.1 | 16.5 | 18.0 |

[Table 2]

Table 2

| | | | | Comparative Example | | | | |
|---|---|---|---|---|---|---|---|---|
| | | | | 1 | 2 | 3 | 4 | 5 |
| Blending [wt%] | Fiber aggregate | | Pulp fiber | 49.0 | 30.0 | 30.0 | 25.5 | 25.0 |
| | | | PP fiber | | 55 | 55 | 46.8 | 10.4 |
| | | | PE/PP composite fiber | | 15 | 15 | 12.7 | 6.3 |
| | | | EVOH fiber | 51 | | | | |
| | Added components during kneading | | Fatty acid metal salt | | | | | |
| | | | PP pellet | | | | | 43.3 |
| | | | Elastomer | | | | 15 | 15 |
| Fiber aggregate | Bulk specific gravity [g/mL] | | | 0.52 | - | 0.29 | 0.29 | 0.28 |
| | Thickness [mm] | | | 0.25 | - | 1.55 | 1.55 | 1.41 |
| | Tensile strength T in first direction [MPa] | | | 0.147 | - | 2.089 | 2.089 | 4.052 |
| | Tensile strength Y in second direction [MPa] | | | 0.055 | - | 2.383 | 2.383 | 4.508 |
| | T/Y | | | 2.69 | - | 0.88 | 0.88 | 0.90 |
| Thickness of molded product [mm] | | | | 4 | 4 | 4 | 4 | 4 |
| Density [g/cm$^3$] | | | | 1.02 | 0.95 | 1.01 | 0.99 | 0.97 |
| Flexural modulus [GPa] | | | | 2.4 | 2.4 | 3.5 | 2.2 | 1.9 |
| Bending strength [MPa] | | | | 34.2 | 69.0 | 54.8 | 38.0 | 34.3 |
| Charpy impact strength [kJ/m$^2$] | | | | 1.7 | 1.9 | 5.9 | 13.6 | 19.8 |

As described in Examples 1 to 25, the molded articles manufactured using the cellulose fiber-containing pellet of the present invention were excellent in flexural modulus and bending strength, excellent in stiffness and strength against bending, and excellent in impact resistance.

On the other hand, as described in Comparative Example 1, when a fiber aggregate was obtained by subjecting a slurry containing a cellulose fiber and an ethylene vinyl alcohol copolymer (EVOH) fiber which was used instead of a polyolefin fiber to papermaking, stiffness and strength against bending were inferior and impact resistance was also low as compared with those in Examples.

In Comparative Example 2 in which a fiber aggregate was not formed but injection-molding was performed after melt-kneading, strength against bending was improved, but stiffness against bending and impact resistance were poor.

Furthermore, in Comparative Examples 3 to 5 containing no fatty acid metal salt, a molded article excellent in both flexural modulus and Charpy impact strength was not obtained.

Reference Signs List

1    web forming apparatus
10    conveyor
20    air-permeable endless belt
30    fiber mixture supply means
40    first carrier sheet supply means
41    first carrier sheet
50    second carrier sheet supply means
51    second carrier sheet
A    air-laid web

**Claims**

1. A cellulose fiber-containing molded article comprising a cellulose fiber, a resin A, and a fatty acid metal salt, wherein

   the fatty acid metal salt is a metal salt of a saturated or unsaturated fatty acid optionally having a hydroxy group and having 12 or more and 24 or less carbon atoms,
   a content of the cellulose fiber in the molded article is 15% by mass or more and 70% by mass or less,
   a content of the fatty acid metal salt is 0.1% by mass or more and 10% by mass or less, and
   when a flexural modulus of the molded article is represented by X GPa and a Charpy impact strength thereof at a thickness of 4 mm is represented by Y kJ/m$^2$, the molded article satisfies the following (i) or (ii):

   $$\text{(i)} \quad 1.8 \leq X \leq 3.5 \text{ and } 100 \geq Y \geq 38 - 8X$$

   $$\text{(ii)} \quad 3.5 \leq X \leq 10 \text{ and } 100 \geq Y \geq 10.$$

2. The cellulose fiber-containing molded article according to claim 1, wherein the fatty acid metal salt is a fatty acid calcium salt optionally having a hydroxy group.

3. The cellulose fiber-containing molded article according to claim **1,** wherein the fatty acid metal salt is at least one selected from the group consisting of calcium stearate, calcium laurate, calcium behenate, and calcium hydroxystearate.

4. The cellulose fiber-containing molded article according to claim **1,** wherein the resin A contains a polyolefin resin.

5. The cellulose fiber-containing molded article according to claim 4, wherein a content of the polyolefin resin in the molded article is 25% by mass or more and 80% by mass or less.

6. The cellulose fiber-containing molded article according to claim 1, wherein the resin A contains an elastomer.

7. The cellulose fiber-containing molded article according to claim 6, wherein a content of the elastomer in the molded article is 5% by mass or more and 20% by mass or less.

8. A method for manufacturing the cellulose fiber-containing molded article according to any one of claims 1 to 7,

   the method comprising the following step 1, step 2, step 3-1, and step 4 in this order, or comprising step 1, step 2, step 3-2, and step 4 in this order, wherein
   an aliphatic metal salt is added in at least one step selected from the group consisting of step 1, step 3-1, and step 4:

   Step 1: a fiber aggregate manufacturing step of manufacturing a fiber aggregate containing a cellulose fiber and at least a part of the resin A by dry papermaking
   Step 2: a fiber aggregate sheet manufacturing step of manufacturing a fiber aggregate sheet by compressing the fiber aggregate
   Step 3-1: a cellulose fiber-containing resin pellet manufacturing step of manufacturing a pellet by melt-kneading the fiber aggregate sheet
   Step 3-2: a cellulose fiber-containing resin pellet manufacturing step of cutting the fiber aggregate sheet
   Step 4: a molded article manufacturing step of manufacturing a molded article using a cellulose fiber-containing resin pellet.

9. The method for manufacturing the cellulose fiber-containing molded article according to claim 8, wherein the fiber aggregate contains a polyolefin fiber in addition to the cellulose fiber.

10. The method for manufacturing the cellulose fiber-containing molded article according to claim 8, wherein an elastomer is further melt-kneaded in at least one step selected from the group consisting of step 3-1 and step 4.

11. The method for manufacturing the cellulose fiber-containing molded article according to claim 8, wherein in step 1, the fiber aggregate is manufactured by an air-laid method.

12. The method for manufacturing the cellulose fiber-containing molded article according to claim 8, wherein when a tensile strength of the fiber aggregate sheet obtained in step 2 in a first direction is represented by T, and a tensile strength of the fiber aggregate sheet in a second direction perpendicular to the first direction is represented by Y, T/Y is 0.5 or more and 1.5 or less.

# FIG. 1

## INTERNATIONAL SEARCH REPORT

| International application No. |
| --- |
| **PCT/JP2023/043878** |

### A. CLASSIFICATION OF SUBJECT MATTER

*C08L 101/00*(2006.01)i; *B29B 15/08*(2006.01)i; *C08J 3/20*(2006.01)i; *C08J 5/00*(2006.01)i; *C08K 5/098*(2006.01)i; *C08L 1/02*(2006.01)i; *C08L 101/16*(2006.01)i; *B29K 105/12*(2006.01)n
FI: C08L101/00 ZBP; C08L1/02; C08K5/098; B29B15/08; C08L101/16; C08J5/00 CES; C08J3/20 Z CEQ; B29K105:12

According to International Patent Classification (IPC) or to both national classification and IPC

### B. FIELDS SEARCHED

Minimum documentation searched (classification system followed by classification symbols)

C08L101/00; B29B15/08; C08J3/20; C08J5/00; C08K5/098; C08L1/02; C08L101/16; B29K105/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2021-161337 A (OJI HOLDINGS CORPORATION) 11 October 2021 (2021-10-11) | 1-12 |
| A | JP 2012-201767 A (NISSAN MOTOR CO., LTD.) 22 October 2012 (2012-10-22) | 1-12 |
| A | JP 2011-006609 A (DAICEL CHEM. IND. LTD.) 13 January 2011 (2011-01-13) | 1-12 |
| A | WO 2014/185243 A1 (DAICEL POLYMER LTD.) 20 November 2014 (2014-11-20) | 1-12 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 December 2023** | **16 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/043878**

| Patent document cited in search report | | | Publication date (day/month/year) | Patent family member(s) | Publication date (day/month/year) |
|---|---|---|---|---|---|
| JP | 2021-161337 | A | 11 October 2021 | (Family: none) | |
| JP | 2012-201767 | A | 22 October 2012 | (Family: none) | |
| JP | 2011-006609 | A | 13 January 2011 | (Family: none) | |
| WO | 2014/185243 | A1 | 20 November 2014 | (Family: none) | |

Form PCT/ISA/210 (patent family annex) (January 2015)

**REFERENCES CITED IN THE DESCRIPTION**

**Patent documents cited in the description**

- JP 6322699 A
- JP 6346399 A
- JP 6345944 A
- JP 2020080328 A